# EUROPEAN PATENT SPECIFICATION

(11) **EP 2 981 587 B1**
(45) Date of publication and mention of the grant of the patent: **05.08.2020**
(21) Application number: 14778649.5
(22) Date of filing: 02.04.2014
(51) Int. Cl.: C09K 8/44, C09K 8/035, C04B 26/04, C04B 26/06, C04B 26/10, C09K 8/50

(54) **POLYMERIC COMPOSITIONS FOR DOWNHOLE APPLICATIONS**
POLYMERZUSAMMENSETZUNGEN FÜR BOHRLOCHANWENDUNGEN
COMPOSITIONS POLYMÈRES DESTINÉES À ÊTRE UTILISÉES EN FOND DE PUITS

(30) Priority: 05.04.2013 US 201361809034 P
(43) Date of publication of application: 10.02.2016
(73) Proprietor: M-I LLC, Houston, TX 77072 (US)
(72) Inventor: CHEW, Andrew, Houston, TX 77035-5123 (US); DE STEFANO, Guido, Houston, TX 77035-5123 (US)
(74) Representative: Schlumberger Intellectual Property Department
(86) International application number: PCT/US2014/032665
(87) International publication number: WO 2014/165584

(56) References cited:
- WO-A1-2012/154473
- WO-A2-2012/174527
- US-A- 5 320 173
- US-A- 5 335 726
- US-A- 5 945 387
- US-A1- 2006 162 930
- US-A1- 2010 065 273
- US-A1- 2011 079 389

## Description

### BACKGROUND

Oilfield drilling typically occurs in geological formations having various compositions, permeabilities, porosities, pore fluids, and internal pressures. Weak zones may occur during drilling due to these formations having a variety of conditions. These weak zones may lead to fluid loss, pressure changes, well cave-ins, etc. The formation of weak zones is detrimental to drilling because they need to be strengthened before drilling work may resume.

Weak zones may occur, for example, when the fracture initiation pressure of one formation is lower than the internal pore pressure of another formation. As another example, increased borehole pressure, created by penetrating one formation, may cause a lower strength formation to fracture. As another example, the fluid pressure gradient in a borehole required to contain formation pore pressure during drilling may exceed the fracture pressure of a weaker formation exposed in a borehole.

Cement, or other fluid compositions used for strengthening weak zones, may also be used in the case of primary cementing operations, lost circulation of the drilling mud, and/or zonal isolations. In primary cementing operations, at least a portion of the annular space between the casing and the formation wall is filled with a cementitious composition, after which time the cement may then be allowed to solidify in the annular space, thereby forming an annular sheath of cement. The cement barrier is desirably impermeable, such that it will prevent the migration of fluid between zones or formations previously penetrated by the wellbore.

Lost circulation is a recurring drilling problem, characterized by loss of drilling mud into downhole formations that are fractured, highly permeable, porous, cavernous, or vugular. These earth formations can include shale, sands, gravel, shell beds, reef deposits, limestone, dolomite, and chalk, among others. Other problems encountered while drilling and producing oil and gas include stuck pipe, hole collapse, loss of well control, and loss of or decreased production.

Induced mud losses may also occur when the mud weight, required for well control and to maintain a stable wellbore, exceeds the fracture resistance of the formations. A particularly challenging situation arises in depleted reservoirs, in which the drop in pore pressure weakens hydrocarbon-bearing rocks, but neighboring or inter-bedded low permeability rocks, such as shales, maintain their pore pressure. This can make the drilling of certain depleted zones impossible because the mud weight required to support the shale exceeds the fracture resistance of the sands and silts.

Other situations arise in which isolation of certain zones within a formation may be beneficial. For example, one method to increase the production of a well is to perforate the well in a number of different locations, either in the same hydrocarbon bearing zone or in different hydrocarbon bearing zones, and thereby increase the flow of hydrocarbons into the well. The problem associated with producing from a well in this manner relates to the control of the flow of fluids from the well and to the management of the reservoir. For example, in a well producing from a number of separate zones (or from laterals in a multilateral well) in which one zone has a higher pressure than another zone, the higher pressure zone may disembogue into the lower pressure zone rather than to the surface. Similarly, in a horizontal well that extends through a single zone, perforations near the "heel" of the well, i.e., nearer the surface, may begin to produce water before those perforations near the "toe" of the well. The production of water near the heel reduces the overall production from the well.
Document WO 2012/174527 A2 discloses a method of treating a wellbore comprising, after having drilled a wellbore, the introduction of a polymer-forming formulation.

In attempting to cure these and other problems, crosslinkable or absorbing polymers, loss control material (LCM) pills, and cement squeezes have been employed. Cement compositions and/or gels, in particular, have found utility in preventing mud loss, stabilizing and strengthening the wellbore, and zone isolation and water shutoff treatments.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In one aspect, embodiments disclosed herein relate to methods of treating a wellbore that include: drilling the wellbore with a drilling fluid, emplacing a polymer-forming composition in the wellbore, and initiating polymerization of the polymer-forming composition to form a polymerized material in the selected region of the wellbore.

In another aspect, embodiments disclosed herein relate to methods for sealing an region of a wellbore that include: preparing a polymer-forming composition, pumping the formulation into an annulus of a wellbore created by at least one concentric string of pipe extending into the wellbore, and initiating polymerization of the at least one pre-polymer and the at least one reactive diluent to form a polymeric material in the selected region of the wellbore.
The present invention relates to a method of treating a wellbore according to present claim 1.

Other aspects and advantages of the invention will be apparent from the following description and the appended claims.

### BRIEF DESCRIPTION OF DRAWINGS

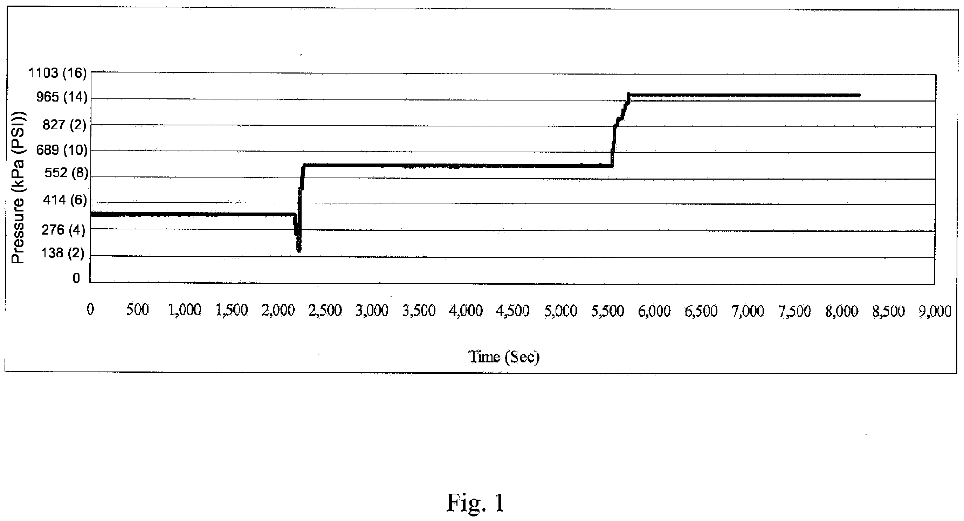

Fig. 1 is an illustration of the stability of a polymeric composition in accordance with the present in accordance with embodiments described herein under applied pressure.

### DETAILED DESCRIPTION

Embodiments disclosed herein relate generally to polymer-forming compositions used in downhole applications, such as wellbore strengthening, stabilizing wellbore casings, zonal isolations, sealing applications, and well abandonment. In some embodiments, application of polymer-forming compositions to an interval of wellbore traversing a subterranean formation may result in the formation of a polymeric material that exhibits an ability to absorb energy and deform without fracturing, *i.e.,* the material exhibits toughness, as well as a degree of rigidity.

In one or more embodiments, polymer-forming composition may be introduced into a wellbore drilled to completely or partially displace any type of initial drilling fluid and, in particular embodiments, compositions may be used to drilling fluid may be used to displace an oil-based, water-in-oil, oil-in-water, or aqueous-based drilling fluid directly, without intermediate steps using a displacement fluid, cleaning fluid, and/or spacer fluid. In one or more embodiments, the fluids of the present disclosure may be added to a well, topping off the well, or being added to a previously emplaced fluid without intermediate steps.

The embodiments described herein may be described in terms of treatment of vertical wells, but is equally applicable to wells of any orientation. The embodiments may be described for hydrocarbon production wells, but it is to be understood that the embodiments may be used for wells for production of other fluids, such as water or carbon dioxide, or, for example, for injection or storage wells. It should also be understood that throughout this specification, when a concentration or amount range is described as being useful, or suitable, or the like, it is intended that any and every concentration or amount within the range, including the end points, is to be considered as having been stated. Furthermore, each numerical value should be read once as modified by the term "about" (unless already expressly so modified) and then read again as not to be so modified unless otherwise stated in context. For example, "a range of from 1 to 10" is to be read as indicating each and every possible number along the continuum between about 1 and about 10.

In one or more embodiments, polymer-forming compositions disclosed herein may be used as a replacement for wellbore cements and used in any cementing application known in the art including, but not limited to, primary cementing, zonal isolation, cement squeezes, fluid loss pills, and the like. When used as a cement replacement (or used in conjunction with cement) in primary cementing operations, polymer-forming compositions of the present disclosure may be placed in at least a portion of an annular space between sidewalls of a wellbore and the exterior of a casing string disposed in the wellbore. The selected polymer-forming composition may then be allowed to solidify therein. The polymer-forming compositions may be placed in the annular space either before or after a wellbore fluid is placed in the annular space. In such embodiments, the polymer-forming composition may be mixed with the wellbore fluid (at least to some extent) ant the polymer-forming composition may still cure despite dilution by the wellbore fluid. In some embodiments, a wellbore or annular space within the wellbore may be preflushed or overflushed with an oleaginous wellbore fluid or an aqueous wellbore fluid such as water, seawater, or brine prior to or following emplacement of a polymer-forming composition, and the polymer-forming composition may be added directly thereto.

According to various embodiments, the polymer-forming compositions of the present disclosure may be used when a casing string or another liner is to be sealed and/or bonded in the annular space between the walls of the borehole and the outer diameter of the casing or liner with polymeric material. In one or more embodiments, polymer-forming compositions may be pumped into annular regions within a wellbore such as, for example, (1) between a wellbore wall and one or more casing strings of pipe extending into a wellbore, or (2) between adjacent, concentric strings of pipe extending into a wellbore, or (3) in one or both of an A- or B-annulus in a wellbore comprising at least an A- and B-annulus with one or more inner strings of pipe extending into a said wellbore, which may be running in parallel or nominally in parallel with each other and may or may not be concentric or nominally concentric with the outer casing string, or (4) in one or more of an A-, B- or C-annulus in a wellbore comprising at least an A-, B- and C-annulus with one or more inner strings of pipe extending into a said wellbore, which may be running in parallel or nominally in parallel with each other and may or may not be concentric or nominally concentric with the outer casing string.

In one example, following drilling of a given interval, a casing or liner may be suspended therein or the borehole may remain open. The drilling fluid may then be displaced directly with a polymer-forming composition in accordance with the present disclosure or by a displacement fluid. When used in conjunction with a casing or liner screen, the polymer-forming composition may be pumped through the interior of the casing or liner and, in some embodiments, followed by a displacement fluid (for example, a selected drilling fluid with which the next interval will be drilled or a displacement fluid) that may displace the polymer-forming fluid into the annulus between the casing or liner and borehole wall. Once the polymer has cured and set in the annular space, drilling of the next interval may continue. Prior to production, the interior of the casing or liner may be cleaned and perforated, as known in the art of completing a wellbore.

In some embodiments, a polymer-forming composition may be pumped into a selected region of the wellbore (such as an open-hole or cased wellbore) needing consolidation, strengthening, fluid-loss reduction, etc., and following curing to form a polymeric mass, a central bore may be drilled out. For example, when loss of a wellbore fluid is being experienced from the formation, the polymer-forming composition of the present disclosure may be emplaced (such as by bullheading) directly into the region of the well experiencing losses and allowed to mix with the drilling fluids and cure.

Polymer-forming compositions disclosed herein may also be used to enhance secondary oil recovery efforts in some embodiments. In secondary oil recovery, it is common to use an injection well to inject a treatment fluid, such as water or brine, downhole into an oil-producing formation to force oil toward a production well. Thief zones and other permeable strata may allow a high percentage of the injected fluid to pass through only a small percentage of the volume of the reservoir, for example, and may thus require an excessive amount of treatment fluid to displace a high percentage of crude oil from a reservoir.

In other embodiments, polymer-forming composition as described herein may be injected into the formation as diverting agents to combat the thief zones or high permeability zones of a formation. The polymer-forming composition injected into the formation may react and partially or wholly restrict flow through the highly conductive zones. In this manner, a generated polymeric mass may effectively reduce channeling routes through the formation and increasing the contact of subsequent fluid treatments with less porous zones of the formation, potentially decreasing the volume of fluid treatments required and increasing the oil recovery from the reservoir. Moreover, polymer-forming compositions may also be employed in the abandonment of wellbores at any operational stage of the well formation or subsequent to cessation of production.

In one or more embodiments, polymer-forming compositions of the present disclosure may be used to displace a drilling fluid without requiring a preflush or cleanup prior to injection of the composition. Polymer-forming liquid compositions may be used in combination with a number of drilling fluids that may include oleaginous or oil-based fluids, aqueous drilling fluids, emulsions, and invert emulsions, for example. In some embodiments, drilling fluid additives, which may include particulate solids such as weighting agents, flocculants, polymeric particles, nanomaterials, drilling solids, and the like, may mix with the polymer-forming liquid compositions and integrate in the polymeric mass generated when the composition cures.

Embodiments of the polymer-forming compositions disclosed herein may possess greater flexibility in their use in wellbore and oilfield applications, as compared to conventional cement. For example, the polymeric mass may be used in applications including: primary cementing operations, zonal isolation; loss circulation; wellbore (WB) strengthening treatments; reservoir applications such as in controlling the permeability of the formation, etc. Depending on the particular application, polymer-forming compositions of the present disclosure may be directly emplaced into the wellbore by conventional means known in the art into the region of the wellbore in which the composition is desired to cure or set into the polymeric mass. Alternatively, the fluid formulation may be emplaced into a wellbore and then displaced into the region of the wellbore in which the fluid formulation is desired to set or cure.

As another example, embodiments of the polymer-forming compositions disclosed herein may be used as a loss circulation material (LCM) treatment when excessive seepage or circulation loss problems are encountered. In such an instance, the polymer-forming formulations may be emplaced into the wellbore into the region where excessive fluid loss is occurring and allowed to set. Upon setting, a generated polymeric mass may optionally be drilled through to continue drilling of the wellbore to total depth.

In some embodiments, a polymerizable component and initiator may be mixed prior to injection of the formulation into the drilled formation. The mixture may be injected while maintaining a low viscosity, prior to polymerization, such that a polymeric mass may be formed downhole. In other embodiments, one or more of the components, such as the initiator, may be injected into the formation in separate shots, mixing and reacting to form a polymeric mass *in situ.* In this manner, premature reaction may be avoided. For example, a first mixture containing polymerizable component and/or reactive diluent may be injected into the wellbore and into the lost circulation zone. A second mixture containing an initiator (and optionally, one of the polymerizable component and/or reactive diluents) may be injected, causing the polymerizable component and reactive diluent (if present) to crosslink *in situ.* The hardened polymeric mass may plug fissures and thief zones, and may close off the lost circulation zones.

Methods of the present application may also include the isolation of pressure differentials between metal tubulars by forming a packer created from polymeric materials of the present application. For example, a polymer-forming composition may be used to create a mechanical packer (or used in conjunction wit an existing packer) that partitions the well in drilling and completion applications. The mechanical packer, once set in place, may provide pressure isolation to a tested rating (or above) and separate producing and non-producing intervals, which may be useful in completion operations, for example. In well suspensions, polymer-forming compositions may provide a temporary barrier within casing. In completion operations, polymeric barriers generated may be placed between an outer casing and an inner tubing to isolate pressure. Another application may include formulating the polymer-forming composition as a slurry and placing the slurry on top of a conventional mechanical packer for additional reliability or as a repair mechanism. Completion tubing is capable of flexing with changing in temperature and the ability of polymeric materials of the present disclosure to adhere and yet be flexible without fracturing may provide zonal isolation, which is often only provided through elastomer seals which may not be pumped downhole.

In another embodiment, the polymer-forming compositions may be used as a well remediation application where the composition is formulated as a slurry and is placed between concentric casing strings to act as a pressure barrier. For example, this may take place when a casing cement does not sufficiently isolate pressurized zones and fluid is allowed to pass between the casing strings. Slurry formulations of the present application may be pumped or placed in the space behind the cement to seal behind the leaking space. In another example, a slurry in accordance with the present disclosure may be placed in a wellbore through pumping or settling and solidify, in order to isolate a pressure zone. Once hardened, the material may have some flexibility and adhere to the metal tubulars within the wellbore, providing pressure isolation.

In one or more embodiments, including any described above, the polymer-forming composition may be diluted using an oil-based or water-based wellbore fluid and still remain polymerizable to form a solid mass and capable of performing the desired functions. In some embodiments, the polymer-forming composition may be diluted up to 50 volume percent (vol%) with a selected wellbore fluid. In other embodiments, the polymer-forming composition may be diluted from any lower limit selected from the group of 5 vol%, 10 vol%, 25 vol%, and 35 vol% to an upper limit selected from the group of 25 vol%, 50 vol%, 65 vol %, 75 vol%, 80 vol%, and 90 vol%.

### Polymerizable Components

The ability of the polymeric material to absorb energy and deform without fracture may be attributed to the constituent polymerizable components that are present in the polymer-forming compositions. As used herein, a "polymerizable component" may be a monomer, oligomer, pre-polymer, or crosslinkable polymer that is capable, when incorporated into a polymer-forming composition, of reacting with an initiator or crosslinker to cause an increase in the observed viscosity of the polymer-forming composition or formation of a polymeric mass.

In one or more embodiments, polymerizable components may include a diene monomer or diene prepolymer. As used herein, a "diene prepolymer" may refer to a polymer resin formed from at least one aliphatic conjugated diene monomer. Examples of suitable aliphatic conjugated diene monomers include C₄ to C₉ dienes such as butadiene monomers, e.g., 1,3-butadiene, 2-methyl- 1,3 -butadiene, and 2-methyl-1,3-butadiene. Homopolymers or blends or copolymers of the diene monomers may also be used. In yet another embodiment, one or more non-diene monomers may also be incorporated in the diene pre-polymer, such as styrene, acrylonitrile, etc. In particular embodiments, at least two diene pre-polymers may be used. In such embodiments, the at least two diene pre-polymers may include a diene homopolymer (1,3 butadiene homopolymer) used in conjunction with a derivatized diene oligomer, such as a (meth)acrylated polybutadiene. A (meth)acrylated diene oligomer may be formed by reacting a diene oligomer with a glycidyl (meth)acrylate or a hydroxyl terminated diene oligomer with alkaline oxide followed by transesterfication with a (meth)acrylate ester. A particular example includes polybutadiene di(meth)acrylates sold by Sartomer Company Inc. (Exton, PA).

In other embodiments, the polymerizable component may be selected from monomers, oligomers, or prepolymers of natural rubbers, cis-polyisoprene rubber, nitrile-based rubbers, ethylene/propylene rubber, styrene/butadiene rubber, butyl rubber, neoprene rubber, silicone rubbers, room temperature vulcanizing (RTV) silicone rubber, and/or a fluor-containing RTV silicone rubber. Other resin compositions that may be employed include phenolic condensation resins; epoxy resin compositions, such as diglycidyl ethers of bisphenols; ureum, and phenol and melamine formaldehyde resins.

The polymerizable components of the present disclosure may have a number average molecular weight broadly ranging from about 500 to 10,000 Da. However, more particularly, the number average molecular weight may range from about 1000 to 5000 Da, and even more particularly, from about 2000 to 3000 Da. For resins, microstructure refers to the amounts 1,2- versus 1,4-addition (for example) and the ratio of cis to trans double bonds in the 1,4-addition portion. The amount of 1,2-addition is often referred to as vinyl content due to the resulting vinyl group that hangs off the polymer backbone as a side group. The vinyl content of the diene prepolymer used in accordance of the present disclosure may range from about 5% to about 90%, and from about 50% to 85% in a more particular embodiment. The ratio of cis to trans double bonds may range from about 1:10 to about 10:1. Various embodiments of the above described components may be non-functionalized; however, functionalization such as hydroxyl terminal groups or malenization may be used in some embodiments. For example, the average number of reactive terminal hydroxyl groups or maleic anhydride functionalization per molecule may range from about 1 to 3, but may be more in other embodiments.

Selection of the particular polymerizable component may be based on several factors, for example, such as the degree rigidity desired for the particular application, the amount of crosslinking desired, viscosity in a pre-cured state, flashpoint, etc.

In one or more embodiments, the polymerizable component, or combinations thereof, may be used in a percent by weight (wt%) of the total weight of the composition that ranges from a lower limit selected from the group of 1 wt%, 2 wt%, 5 wt%, and 10 wt% to an upper limit selected from the group of 10 wt%, 20 wt%, 20 wt%, 30 wt%, 35 wt%, 50 wt%, and 60 wt%.

### Reactive Diluent

In one or more embodiments, the polymer-forming compositions may include a reactive diluent that lowers the viscosity of the polymerizable component. The incorporation of a reactive diluent may also increase the tensile strength and flexural strength of the cured solid polymeric material. Increased tensile and flexural strength of the polymeric material may be due to the steric hindrance of the reactive diluents within the polymer network after curing. Chemically, the reactive diluents may be an ester or amide of unsaturated carboxylic acids, (including di- or tricarboxylic acids) such as an alkyl ester or amide, a cycloalkyl (including heterocycles) ester or amide of (meth)acrylate. For example, particular embodiments may use such a monomer having a substituted or unsubstituted (excluding polar or hydrophilic substituents), cyclic or bicyclic ring structure at the alpha or beta carbon position. Particular substituents may include C1-C3 alkyl groups. Specific examples of reactive diluents include 4-acryloylmorpholine, 2-phenoxyethyl (meth)acrylate, isodecyl (meth)acrylate, lauryl (meth)acrylate, isobornyl (meth)acrylate, trimethylolpropane tri(meth)acrylate, tripropylene glycol di(meth)acrylate, and bisphenol A ethoxylate diacrylate. In particular embodiments, combinations of two or more reactive diluents may be used, such as for example, a combination of isobornyl acrylate with trimethylolpropane trimethacrylate.

Particularly suitable reactive diluents may be in liquid form, having a viscosity at 25°C ranging from about 0.002 to 0.050 Pa·s (2 to 50 cps) (or 0.002 to 0.020 Pa·s (2 to 20 cps) in particular embodiments) and a glass transition temperature (for the corresponding homopolymerized reactive diluents) in the range of 90 to 130°C, and may be at least oil-miscible. Alternative reactive diluents that may be used instead of or in addition to (meth)acrylates include other vinyl monomers which might increase the network of the final product and therefore it's mechanical properties capable of anionic addition polymerization (without chain transfer or termination) that contain non-polar substituent(s) on the vinyl group that can stabilize a negative charge through delocalization such as styrene, epoxide, vinyl pyridine, episulfide, N-vinyl pyrrolidone, and N-vinyl caprolactam or molecules with two or more vinyl or acrylate groups.

The reactive diluent may be used in an amount ranging from about 25 to about 80 weight percent, based on the total weight of the formulation, from about 30 to about 75 weight percent in other embodiments, from about 35 to about 75 weight percent in other embodiments, from about 45 to 80 weight percent in other embodiments, and from about 45 to about 65 weight percent in yet other embodiments.

In yet other embodiments, the reactive diluent may be present a percent by weight of the total composition (wt%) that ranges from a lower limit selected from any of 25, 30, 35, 40, or 45 wt%, and an upper limit selected from any of 40, 45, 50, 60, 70, 75, or 80 wt%, where any lower limit may be used with any upper limit.

Further, in embodiments that contain a reactive diluent, the amount of reactive diluent may be in excess of the at least one polymerizable component. For example, the amount of reactive diluent relative to the amount of prepolymer(s) may be at least 2:1, or at least 3:1, 4:1, 5:1, 6:1, and/or in some embodiment may be up to 7:1, 8:1, 9:1, or 10:1, where any lower limit may be used in combination with any upper limit.

### Inert Diluent

An inert diluent, *i.e.,* solvent, may also be incorporated to achieve desired viscosity and rheology of the polymer-forming composition. Such solvents that may be appropriate may comprise any oil-based fluid used in downhole applications, such as diesel oil; mineral oil; a synthetic oil, such as hydrogenated and unhydrogenated olefins including polyalpha olefins, linear and branch olefins and the like, polydiorganosiloxanes, siloxanes, or organosiloxanes, esters of fatty acids, specifically straight chain, branched and cyclical alkyl ethers of fatty acids, mixtures thereof and similar compounds known to one of skill in the art; and mixtures thereof, as well as any mutual solvent, examples of which include a glycol ether or glycerol. The use of the term "mutual solvent" includes its ordinary meaning as recognized by those skilled in the art, as having solubility in both aqueous and oleaginous fluids. In some embodiments, the mutual solvent may be substantially completely soluble in each phase while in select other embodiment, a lesser degree of solubilization may be acceptable. Illustrative examples of such mutual solvents include for example, alcohols, linear or branched such as isopropanol, methanol, or glycols and glycol ethers such as 2-methoxyethanol, 2-propoxyethanol, 2-ethoxyethanol, diethylene glycol monoethyl ether, dipropylene glycol monomethyl ether, ethylene glycol monobutyl ether, ethylene glycol dibutyl ether, diethylene glycol monoethyl ether, diethyleneglycol monomethyl ether, tripropylene butyl ether, dipropylene glycol butyl ether, diethylene glycol butyl ether, butylcarbitol, dipropylene glycol methylether, various esters, such as ethyl lactate, propylene carbonate, butylene carbonate, etc, and pyrrolidones.

In one or more embodiments, an inert diluent may be added to a polymer-forming composition at a percent by weight of the total composition (wt%) ranging from a lower limit selected from the group of 2.5, 5, 8, 10, 15, and 20 wt% to an upper limit selected from the group of 20, 30, 35, 40, and 45 wt%. In some embodiments, the diluent solvent may be selected from diesel oil; mineral oil; or a synthetic oil, without the use of a mutual solvent.

### Initiator

In embodiments, the polymerizable components are contacted with at least one initiator in order to effect the formation of the polymeric material. The initiator may be added to the polymer-forming composition at any time prior to or after, emplacement within a wellbore. In other embodiments, the imitator may be contained in a second fluid formulation that is contacted with the polymer-forming composition simultaneously (or in alternating additions) as it is pumped downhole.

In general, the initiator may be any nucleophilic or electrophilic group that may react with the reactive groups available in the polymers and/or monomers. In further embodiments, the initiator may comprise a polyfunctional molecule with more than one reactive group. Such reactive groups may include for example, amines, alcohols, phenols, thiols, carbanions, organofunctional silanes, and carboxylates.

Examples of initiators include free radical initiating catalysts, azo compounds, alkyl or acyl peroxides or hydroperoxides, dialkyl peroxides, ketoperoxides, peroxy esters, peroxy carbonates, peroxy ketals, and combinations thereof. Examples of free radical initiating catalysts include benzoyl peroxide, di(3,5,5-trimethylhexanoyl) peroxide, dibenzoyl peroxide, diacetyl peroxide, di-n-nonanoyl peroxide, disuccinic acid peroxide, di-t-butyl peroxide, cumyl peroxide, dicumyl peroxide, di-n-propyl peroxydicarbonate, dilauroyl peroxide, tert-hexyl peroxyneodecanoate, t-butyl hydroperoxide, methyl ketone peroxide, acetylacetone peroxide, methylethyl ketone peroxide, dibutylperoxyl cyclohexane, p-menthyl hydroperoxide, di (2,4-dichlorobenzoyl) peroxide, diisobutyl peroxide, t-butyl perbenzoate, t-butyl peracetate, and combinations thereof. Further, one skilled in the art would appreciate that any of the above initiators may be suspended in a diluent, such as a phthalate (including dialkyl phthalates such as dimethyl or diisobutyl phthalate, among others known in the art).

In one or more embodiments, the concentration of the initiator or combination of initiators may be added to the polymer-forming compositions of the present disclosure at a percent by weight of the total weight (wt%) that ranges from a lower limit selected from the group of 0.1 wt%, 0.2 wt%, 0.5 wt%, 1 wt%, and 2 wt%, to an upper limit selected from the group of 1 wt%, 2 wt%, 5 wt%, 8 wt%, and 10 wt%.

### Water Absorbing Agents

In one or more embodiments, water absorbing agents may be added to polymer-forming compositions of the instant disclosure to control the curing time for the selected polymer system. In some applications, the water absorbing agent may be added directly to the polymer-forming compositions or contacted with the composition at some later stage in the selected operation. Following contact, such as in a mixing tee, a holding tank, a pumparound system, or other fluid containment or transport devices or systems, the water absorbing agent may then absorb the water.

Water absorbing agents may include, in some embodiments, water absorbing polymers, such as polyacrylates, among others. In other embodiments, the water absorbing agent may be silica gel or a solvent system such as those containing mutual solvents, including ethylene glycol, glycol ethers such as ethylene glycol monobutyl ether, diethylene glycol mono butyl ether, and the like; alcohols such as ethanol, propanol, butanol, pentanol, isoforms thereof, and the like; or other solvents, that may act to isolate water from the reacting polymeric components.

In addition to polyacrylates mentioned above, the swellable water absorbent media may include superabsorbent polymers (SAP) made from chemically modified starch and cellulose and other polymers like poly(vinyl alcohol) PVA, poly(ethylene oxide) PEO, all of which are hydrophilic and have a high affinity for water. When lightly cross-linked, chemically or physically, these polymers may be water swellable but not water-soluble. Also, SAPs are made from partially neutralised, lightly cross-linked poly(acrylic acid) may also be used. Cross-linking agents such as: tetraallylethoxy ethane or 1,1,1-trimethylolpropanetricrylate (TMPTA) may be used to provide the desired amount of crosslinking, for example. In a particular embodiment, the water absorbing agent may be Polyswell™ available from M-I L.L.C. (Houston, TX).

In one or more embodiments, the polymer-forming composition may include a water absorbing agent incorporated at a percent by weight (wt%) that may range from any lower limit selected from the group of 0.1 wt%, 0.5 wt%, 1 wt%, and 2 wt% to an upper limit selected from the group of 5 wt %, 10 wt%, 15%, 25 wt%, and 30 wt%.

### Accelerators and Retardants

Accelerators and retardants may optionally be used to control the cure time of the polymeric mass. For example, an accelerator may be used to shorten the cure time while a retardant may be used to prolong the cure time. In some embodiments, the accelerator may include an amine, a sulfonamide, or a disulfide, and the retardant may include a stearate, an organic carbamate and salts thereof, a lactone, or a stearic acid.

### Additives

Additives are widely used in polymeric compositions to tailor the physical properties of the resultant polymer material and/or the initial fluid formulation. In some embodiments, additives may include plasticizers, thermal and light stabilizers, flame-retardants, fillers, adhesion promoters, rheological additives, or weighting agents.

Addition of plasticizers may reduce the modulus of the polymer at the use temperature by lowering its glass transition temperature (Tg). This may allow control of the viscosity and mechanical properties of the polymeric material. In some embodiments, the plasticizer may include phthalates, epoxides, aliphatic diesters, phosphates, sulfonamides, glycols, polyethers, trimellitates or chlorinated paraffin. In some embodiments, the plasticizer may be a diisooctyl phthalate, epoxidized soybean oil, di-2-ethylhexyl adipate, tricresyl phosphate, trioctyl trimellitate, and other plasticizers known in the art.

In various embodiments, the addition of adhesion promoters may improve adhesion to various substrates. In some embodiments, adhesion promoters may include modified phenolic resins, modified hydrocarbon resins, polysiloxanes, silanes, or primers.

Addition of rheological additives may control the flow behavior of the formulation prior to polymerization, and may aid in suspension of any weighting agents present in the formulation. In some embodiments, rheological additives may include fine particle size fillers, organic agents, or combinations of both. In some embodiments, rheological additives may include precipitated calcium carbonates or other inorganic materials, non-acidic clays such as organoclays including organically modified bentonite, smectites, and hectoriets, fumed silicas or other nano-sized silicas including those coated with a hydrophobic coating such as dimethyldichlorosilane, carbon nanotubes, synthetic or natural fibrous structures (such as those described in WO 2010/088484), grapheme, functionalized grapheme, graphite oxide, styrenic block copolymers, or modified castor oils. Rheological additives may be present in an amount up to 10 ppb, and between 1 ppb to 8 ppb in particular embodiments. Further, it is also within the scope of the present disclosure that any oil-based viscosifier, such as organophilic clays, normally amine treated clays, oil soluble polymers, polyamide resins, polycarboxylic acids, soaps, alkyl diamides, triphenylethylene, and stilbene may also be optionally incorporated into the fluid formulation. The amount of viscosifier used in the composition may vary upon the end use of the composition. However, normally about 0.1% to 6% by weight range is sufficient for most applications.

Other oil-swellable materials may include natural rubbers, nitrile rubbers, hydrogenated nitrile rubber, ethylene-propylene-copolymer rubber, ethylene-propylene-diene terpolymer rubber, butyl rubber, halogenated butyl rubber, brominated butyl rubber, chlorinated butyl rubber, chlorinated polyethylene, starch-polyacrylate acid graft copolymer, polyvinyl alcohol cyclic acid anhydride graft copolymer, isobutylene maleic anhydride, polyacrylates, acrylate butadiene rubber, vinylacetate-acrylate copolymer, polyethylene oxide polymers, carboxymethyl cellulose type polymers, starch-polyacrylonitrile graft copolymers, styrene, styrenebutadiene rubber, polyethylene, polypropylene, ethylene-propylene comonomer rubber, ethylene propylene diene monomer rubber, ethylene vinyl acetate rubber, hydrogenized acrylonitrile-butadiene rubber, acrylonitrile butadiene rubber, isoprene rubber, neoprene rubbers, sulfonated polyethylenes, ethylene acrylate, epichlorohydrin ethylene oxide copolymers, ethylene-proplyene rubbers, ethylene-propylene-diene terpolymer rubbers, ethylene vinyl acetate copolymer, acrylamides, acrylonitrile butadiene rubbers, polyesters, polyvinylchlorides, hydrogenated acrylonitrile butadiene rubbers, fluoro rubber, fluorosilicone rubbers, silicone rubbers, poly 2,2,1-bicyclo heptenes (polynorbornene), alkylstyrenes, or chloroprene rubber. While the specific chemistry is of no limitation to the present methods, oil-swelling polymer compositions may also include oil-swellable elastomers.

Polymer-forming compositions of the current disclosure may also contain other common treatment fluid ingredients such as fluid loss control additives, dyes, tracers, anti-foaming agents when necessary, and the like, employed in typical quantities, known to those skilled in the art. Of course, the addition of such other additives should be avoided if it will detrimentally affect the basic desired properties of the treatment fluid.

In one or more embodiments, a particulate solid or weighting material may be added to the polymer-forming compositions prior to emplacing the compositions downhole. In other embodiments, particulate solids or weighting agents present downhole, present in residues from a drilling fluid as an example, may be mixed and incorporated into the polymer-forming compositions *in situ.* Weighting agents or density materials suitable for use the fluids disclosed herein include galena, hematite, magnetite, iron oxides, ilmenite, barite, siderite, celestite, dolomite, calcite, and the like. The quantity of such material added, if any, may depend upon the desired density of the final composition. Typically, weighting agent is added to result in a fluid density of up to about 2876 g/dm³ (24 pounds per gallon). The weighting agent may be added up to 2516 g/dm³ (21 pounds per gallon) in one embodiment, and up to 2337 g/dm³ (19.5 pounds per gallon) in another embodiment. Further, in another embodiment, the weighting agent may be used to result in a fluid density of greater than 959 g/dm³ (8 pounds per gallon) and up to 1917 g/dm³ (16 pounds per gallon). Other embodiments may have a lower limit of any of 839, 959, 1078, 1198, 1318, 1438, or 1558 g/dm³ (7, 8, 9, 10, 11, 12, or 13 pounds per gallon), and an upper limit of any of 1078, 1198, 1318, 1438, 1558, 1678, 1797, or 1917 g/dm³ (9, 10, 11, 12, 13, 14, 15, or 16 pounds per gallon), where any lower limit can be used in combination with any upper limit.

Lightweight agents, having typically a density of less than 2g/cm³, and preferably less than 0.8g/cm³, may also be used when density has to be decreased. These can be selected, for example, from hollow microspheres, in particular silico-aluminate microspheres or cenospheres, synthetic materials such as hollow glass beads, and more particularly beads of sodium-calcium-borosilicate glass, ceramic microspheres, e.g. of the silica-alumina type, or beads of plastics material such as polypropylene beads.

### Polymer Preparation

In embodiments, a polymeric mass is formed by mixing all of the desired components together, which may including the polymer-forming composition, initiator, and other additives that may include diluent, solvent, and rheology additives, at the well site, prior to pumping the mixture downhole.

In further embodiments, one or more of polymerizable components, reactive diluents, base oil solvent, and rheological additive may be pre-mixed off-site and included in barrels or the like. At the well-site, prior to pumping downhole, the initiator may be added to the pre-mixed formulation. Depending on the particular additives desired, one or more of such additives, such as a weighting agent, may be added either at the wellsite or in the pre-packaged barrel. Further, in yet another alternative method, instead of being pre-mixed with the other components, the rheological additive may be mixed into the formulation at the well-site.

### Setting Temperature

In some embodiments, one or more of the polymerizable component, the reactive diluent, and the initiator may be reacted at a temperature ranging from about 30 to about 250°C; from about 50 to about 150°C in other embodiments; and from about 60 to about 100°C in yet other embodiments, and such temperatures may include those experienced downhole such that the initiation of polymerization between the polymerizable component and reactive diluents (if present) occurs upon exposure to the wellbore temperatures upon being placed downhole. However, one of ordinary skill in the art would appreciate that, in various embodiments, the reaction temperature may determine the amount of time required for polymeric material formation.

### Time Required for Polymer Formation

Embodiments of the polymeric materials disclosed herein may be formed by mixing a polymer-forming composition with an initiator. In some embodiments, a polymeric mass may form within about 3 hours of mixing the formulation components with the initiator. In other embodiments, a polymeric mass may form within 6 hours of mixing the components with the initiator; or within 9 hours of mixing in other embodiments.

The initiator upon aging at temperatures of about 30°C to about 250 °C prompts the formation of free radicals in the polymers and/or diluent monomers. The radicals in turn cause the bond formation of the polymers and/or diluent monomers. The bonding changes the liquid composition into a hard polymeric mass.

### EXAMPLES

### Example 1 - Stability of polymeric compositions under temperature.

A polymer-forming composition (PFC) was formulated as shown below in Table 1, where SR 350 is a reactive diluent from Sartomer Technology Co. (Exton, PA), RICON® 152 is a polybutadiene homopolymer resin available from Cray Valley (Houston, Texas), CN 301 is a copolymer, XR 3521 is a terpene-based inhibitor available from AOC LLC (Collierville, TN), Syn B (Synthetic B) is an inert diluent base oil, Perkadox is a polymerization initiator from Akzo Nobel Polymer Chemicals LLC (Chicago, IL).

**Table 1 - PFC formulation for Example 1.**

| PRODUCT | UNITS | | wt% |
|---|---|---|---|
| SR 350 | kg/m³ (ppb) | 655.6 (229.8) | 65.66% |
| Ricon 152 | kg/m³ (ppb) | 91.3 (32.01) | 9.15% |
| CN 301 | kg/m³ (ppb) | 45.7 (16.01) | 4.57% |
| XR 3521 | kg/m³ (ppb) | 0.6 (0.23) | 0.07% |
| Syn B | kg/m³ (ppb) | 188.9 (66.2) | 18.91% |
| Triphenylethylene | kg/m³ (ppb) | 6.6 (2.33) | 0.67% |
| Perkadox | kg/m³ (ppb) | 9.8 (3.43) | 0.98% |
| | Weight | 998.5 (350.01) | 346.58 |

After components were combined, the rheology of the PFC was tested using a Fann 35 Viscometer (Fann Instrument Company), at 19°C (67°F), 38°C (100°F), and 65°C (150°F), as shown below in Table 2. The PFC displayed low rheology at 40°F while staying homogeneous and maintained stability even at higher temperatures.

**Table 2 - Rheology as a function of temperature for the polymer forming composition of Example 1.**

| RHEOLOGY: | Temp. (°C (°F)) | 4(40) | 25 (78) | 38 (100) | 65 (150) |
|---|---|---|---|---|---|
| 600 RPM | | 209 | 81 | 21 | 21 |
| 300 RPM | | 111 | 42 | 27 | 11 |
| 200 RPM | | 75 | 29 | 18 | 8 |
| 100 RPM | | 39 | 16 | 10 | 5 |
| 6 RPM | | 5 | 3 | 3 | 2 |
| 3 RPM | | 3 | 3 | 2 | 2 |
| GELS 10" | kg/100 m2 (lbs/100ft2) | 19 (4) | 15 (3) | 10 (2) | 10 (2) |
| APPARENT VISC. | Pa·s (cP) | 0.104 (104.5) | 0.040 (40.5) | 0.010 (10.5) | 0.010 (10.5) |
| PLASTIC VISC. | Pa·s (cP) | 0.098 (98) | 0.039 (39) | -0.006 (-6) | 0.010 (10) |
| YIELD POINT | kg/100 m2 (lbs/100ft2) | 63 (13) | 15 (3) | 161 (33) | 5 (1) |

In order to simulate downhole conditions in which the PFC is used to displace a wellbore fluid, the PFC of Table 1 was also diluted 50:50 with EMS 4200 (1.26 g/cm³ (10.5 ppg)), an oil-based wellbore fluid (OBM). Once mixed the components were stable at room temperature. Rheology of the compositions was measured as shown in Table 3. Rheology stayed low and no settling was found after testing. Final fluid density with the drilling mud is 1.15 g/cm³ (9.62 ppg).

**Table 3 - Rheology as a function of temperature for a 50/50 dilution of a polymer-forming composition and EMS 4200.**

| **RHEOLOGY:** | Temp. (°C (°F)) | **4 (40F)** | **25 (78F)** | **38 (100F)** | **65 (150F)** |
|---|---|---|---|---|---|
| 600 RPM | | 124 | 72 | 44 | 22 |
| 300 RPM | | 62 | 37 | 23 | 12 |
| 200 RPM | | 42 | 26 | 16 | 9 |
| 100 RPM | | 22 | 14 | 9 | 6 |
| 6 RPM | | 3 | 3 | 2 | 3 |
| 3 RPM | | 2 | 2 | 2 | 2 |
| GELS 10" | kg/100 m2 (lbs/100ft2) | 19 (4) | 15 (3) | 15 (3) | 10 (2) |
| APPARENT VISC. | Pa·s (cP) | 0.062 (62) | 0.036 (36) | 0.022 (22) | 0.011 (11) |
| PLASTIC VISC. | Pa·s (cP) | 0.062 (62) | 0.035 (35) | 0.021 (21) | 0.001 (10) |
| YIELD POINT | kg/100 m2 (lbs/100ft2) | 0 (0) | 10 (2) | 10 (2) | 10 (2) |

### Example 2 - Performance of PFC in dilution conditions.

In a second example, a dilution series was conducted with the PFC of Example 1 in which samples were prepared containing various ratios of the EMS 4200 OBM. Samples were prepared and rheology was measured as shown below in Table 4.

**Table 4 - Series dilution of a polymer-forming composition with EMS 4200.**

| | Ratio OBM/PFC | 30/70 | 40/60 | 60/40 | 70/30 |
|---|---|---|---|---|---|
| RHEOLOGY: | °F | RT | RT | RT | RT |
| 600 RPM | | 111 | 142 | 99 | 94 |
| 300 RPM | | 66 | 83 | 53 | 48 |
| 200 RPM | | 50 | 60 | 36 | 32 |
| 100 RPM | | 31 | 38 | 20 | 18 |
| 6 RPM | | 12 | 12 | 3 | 3 |
| 3 RPM | | 10 | 10 | 2 | 2 |
| GELS 10" | kg/100 m2 (lbs/100ft2) | 63 (13) | 59 (12) | 15 (3) | 15 (3) |
| GELS 10' | kg/100 m2 (lbs/100ft2) | 73 (15) | 308 (63) | 39 (8) | 20 (4) |
| APPARENT VISC. | Pa·s (cP) | 0.055 (55.5) | 0.071 (71) | 0.049 (49.5) | 0.047 (47) |
| PLASTIC VISC. | Pa·s (cP) | 0.045 (45) | 0.059 (59) | 0.046 (46) | 0.046 (46) |
| YIELD POINT | kg/100 m2 (lbs/100ft2) | 103 (21) | 117 (24) | 34 (7) | 10 (2) |

### Example 3 - Pressure stability of PFCs.

A 25/75 mix of OBM/PFC was formulated as shown below in Table 5, where ESCAID™ 110 is a base oil, WARP™ is a micronized weighting agent, VG-SUPREME™ is a rheological additive, and VERSAPAC™ is a thermally activated organic thixotrope, all of which are available from M-I L.L.C. (Houston, TX).

**Table 5 - PFC formulation 1 for Example 3.**

| | PRODUCT | UNITS | PFC | | PFC+OBM |
|---|---|---|---|---|---|
| **PFC** | SR 350 | kg/m³ (ppb) | 655.6 (229.8) | 65.66% | 50.215% |
| | Ricon 152 | kg/m³ (ppb) | 91.3 (32.01) | 9.15% | 6.995% |
| | CN 301 | kg/m³ (ppb) | 45.7 (16.01) | 4.57% | 3.498% |
| | XR 3521 | kg/m³ (ppb) | 0.6 (0.23) | 0.07% | 0.050% |
| | Syn B | kg/m³ (ppb) | 188.9 (66.2) | 18.91% | 14.466% |
| | Triphenvlethvlene | kg/m³ (ppb) | 6.6 (2.33) | 0.67% | 0.509% |
| | Perkadox | kg/m³ (ppb) | 9.8 (3.43) | 0.98% | 0.750% |
| **OBM** | ESCAID 110 | kg/m³ (ppb) | | | 9.447% |
| | WARP | kg/m³ (ppb) | | | 3.028% |
| | VG Supreme | kg/m³ (ppb) | | | 2.325% |
| | Versapac | kg/m³ (ppb) | | | 8.718% |
| | | | | 100.00% | 100.000% |
| | | Weight | 998.5 (350.01) | 346.58 | |

To test the ability of the PFC formulation under applied pressure, samples were allowed to cure and back pressure was applied. The pressure was increased incrementally and recorded at seal failure or "breakthrough." Results are shown below in Table 6.

**Table 6 - Breakthrough pressures measured for diluted PFCs.**

| | Breakthrough Pressure (kPa (psi)) | | | | |
|---|---|---|---|---|---|
| PFC/OBM (%v/v) | 25% | 35% | 50% | 65% | 75% |
| Air Pressure | 0 | 0 | 1034 (15) | 1379 (20) | 1724-2068 (25-30) |
| Seawater Pressure | N/A | N/A | 345 (5) | 689 (10) | 896(13) |

A second formulation containing a water absorbing agent, POLYSWELL™ available from M-I L.L.C. (Houston, TX), was prepared as shown in Table 7.

**Table 7 - PFC formulation 2 for Example 3.**

| | PRODUCT | UNITS | PFC | | 11396.6 | PFC+OBM |
|---|---|---|---|---|---|---|
| **PFC** | SR 350 | kg/m³ (ppb) | 655.6 (229.8) | 66.10% | 7532.612 | 45.956% |
| | Ricon 152 | kg/m³ (ppb) | 91.3 (32.01) | 9.21% | 1049.256 | 6.401% |
| | CN 301 | kg/m³ (ppb) | 45.7 (16.01) | 4.60% | 524.7917 | 3.202% |
| | XR 3521 | kg/m³ (ppb) | 0.6 (0.23) | 0.07% | 7.539168 | 0.046% |
| | SynB | kg/m³ (ppb) | 188.9 (66.2) | 19.04% | 2169.969 | 13.239% |
| | Perkadox | kg/m³ (ppb) | 9.8 (3.43) | 0.99% | 112.4319 | 0.686% |
| **OBM** | ESCAID 110 | kg/m³ (ppb) | | | 1407.62 | 8.588% |
| | WARP | kg/m³ (ppb) | | | 451.145 | 2.752% |
| | VG Supreme | kg/m³ (ppb) | | | 346.4 | 2.113% |
| | Versapac | kg/m³ (ppb) | | | 1299 | 7.925% |
| | POLYSWELL | kg/m³ (ppb) | | | 1490.07 | 9.091% |
| | | | | 100.00% | 16390.84 | 100.000% |
| | | Weight | 991.9 (347.68) | 344.25 | | |

The applied pressure test was repeated again with PFC formulation 1 (PFC 1) and the new formulation containing the water absorbing agent (PFC 2). Again, samples were allowed to cure and back pressure was applied. The pressure was increased incrementally and recorded at seal failure or "breakthrough." Results are shown below in Table 8.

**Table 8 Breakthrough data for Example 3.**

| Breakthrough Pressure (kPa (psi)) | | |
|---|---|---|
| | PFC 1 | PFC 2 |
| POLYSWELL Concentration | 0 kg/m³ (ppb) | 97.0 kg/m³ (34 ppb) (10%) |
| Water Pressure | <1034 kPa (15 PSI) | >1724 kPa (25 PSI) |

### Example 4 - Pressurized casing test with PFC.

A larger scale custom setup was built from an insulated portion of concentric pipe strings that included a sensor-equipped valve for measuring pressure in real time. The setup was equilibrated to 93°C (200°F). Once the setup reached a steady temperature, the PFC 2 formulation show in Table 7 (25/75 OBM/PFC + 10 wt% POLYSWELL) was added to the annular region of the setup and the center pipe string was filled with water. To simulate off-shore conditions, PFC 2 was also mixed with approximately 1/3 v/v of seawater. The sample was allowed to heat overnight maintaining temperature at atmospheric pressure. The sample was cooled over the next day to approximately RT, and the setup was sealed and tested for pressure. Results of the pressure test are plotted as a function of time in Fig. 1.

Embodiments of the present disclosure may provide at least one of the following advantages. Polymer-forming compositions of the instant disclosure may also exhibit enhanced compatibility with oil-based and water-based muds, reducing or eliminating the need to remove drilling muds from the wellbore prior to injection of the polymeric compositions of the present disclosure. Further, in some embodiments, additives present in the wellbore fluids may incorporate into the forming polymeric mass and be used to tune the final strength thereof.

Polymer-forming compositions may also be used as an improvement or replacement for cements used in wellbore operations. While pumping of conventional cement can cause fluid losses during pumping of the cement slurry due to the equivalent circulating density (ECD) of the fluid being pumped at a rate sufficient to prevent premature hardening, the present application may provide for an alternative polymeric material for which the density of the material may be selected based on the particular wellbore being treated to reduce the ECD. Further, while cement is generally susceptible to crack formation, the presence of the polymer in the polymeric material may allow the cured polymeric material to possess a greater ability to absorb energy and deformation without fracturing (toughness), while also possessing sufficient rigidity, due to the use of the reactive diluent in the formulation. Conventionally, polymeric materials that do exhibit some amount of toughness do so at the expense of fluid rheology and viscosity prior to curing, control of cure, temperature limitations, adhesion to substrate after curing, and tolerance to contamination.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims. Moreover, embodiments described herein may be practiced in the absence of any element that is not specifically disclosed herein.

## Claims

1. A method of treating a wellbore, comprising:
drilling the wellbore with a drilling fluid;
emplacing a polymer-forming composition in the wellbore; and
initiating polymerization of the polymer-forming composition to form a polymerized material in the selected region of the wellbore,
wherein emplacing a polymer-forming composition directly displaces the drilling fluid in at least a selected region of the wellbore.

2. The method of claim 1, wherein the polymer-forming composition comprises at least one polymerizable component and at least one initiator and wherein the polymer-forming composition further comprises at least one reactive diluent and/or at least one inert diluent comprising an oleaginous liquid or a mutual solvent.

3. The method of claim 2, wherein the at least one polymerizable component comprises a polybutadiene homopolymer and/or a polybutadiene dimethacrylate.

4. The method of claim 2, wherein the reactive diluent is an ester or amide of unsaturated carboxylic acids.

5. The method of claim 2, wherein the reactive diluent comprises at least a cycloalkyl ester of (meth)acrylate.

6. The method of claim 2, wherein the reactive diluent is in liquid form and has a viscosity at 25OC ranging from about 0.002 to 0.020 Pa.s (2 to 20 cps).

7. The method of claim 2, wherein the reactive diluent is selected such that if in homopolymerized form, the homopolymerized reactive diluent has a glass transition temperature ranging from about 90 to 1 30°C.

8. The method of claim 2, wherein the reactive diluent is at least oil-miscible.

9. The method of any one of the above claims, wherein the formulation further comprises at least one rheological modifier.

10. The method of any one of the claims 1-9, wherein the emplacing comprises emplacing the polymer-forming composition in an annular region formed between a wellbore wall and a casing or liner.

11. The method according to claim 10, wherein the method further comprises injecting a displacement fluid after emplacing the polymer-forming composition.

12. The method of any one of the claims 1-9, wherein the emplacing comprises emplacing the polymer-forming composition in an annular region formed between a first casing string and a second casing string.

13. The method of any one of the claims 1-9, wherein the emplacing comprises emplacing the polymer-forming composition between a production tubing and a wellbore wall or casing string and adjacent a mechanical packer.

14. The method of any one of the claims 1-9, wherein emplacing the polymer-forming composition is in response to experiencing fluid loss downhole.

15. The method of any one of the claims 1-9, further comprising sealing the wellbore and abandonment.

## Patentansprüche

1. Verfahren zur Behandlung eines Bohrlochs, umfassend:
Abteufen des Bohrlochs mit einer Bohrspülung;
Einbringen einer polymerbildenden Zusammensetzung in das Bohrloch; und Initiieren der Polymerisation der polymerbildenden Zusammensetzung, um ein polymerisiertes Material im ausgewählten Bereich des Bohrlochs auszubilden,
wobei das Einbringen einer polymerbildenden Zusammensetzung direkt die Bohrspülung in wenigstens einem ausgewählten Bereich des Bohrlochs verdrängt.

2. Verfahren nach Anspruch 1, wobei die polymerbildende Zusammensetzung wenigstens ein polymerisierbares Bestandteil und wenigstens einen Initiator umfasst, und wobei die polymerbildende Zusammensetzung ferner wenigstens einen reaktiven Verdünner und/oder wenigstens einen inerten Verdünner umfasst, der eine ölhaltige Flüssigkeit oder ein gegenseitiges Lösungsmittel umfasst.

3. Verfahren nach Anspruch 2, wobei der wenigstens eine polymerisierbare Bestandteil ein Polybutadien-Homopolymer und/oder ein Polybutadien-Dimethacrylat umfasst.

4. Verfahren nach Anspruch 2, wobei der reaktive Verdünner ein Ester oder Amid ungesättigter Carbonsäuren ist.

5. Verfahren nach Anspruch 2, wobei der reaktive Verdünner wenigstens einen Cycloalkylester von (Meth)acrylat umfasst.

6. Verfahren nach Anspruch 2, wobei der reaktive Verdünner flüssig vorliegt und eine Viskosität bei 25 °C im Bereich von etwa 0,002 bis 0,020 Pa·s (2 bis 20 cps) aufweist.

7. Verfahren nach Anspruch 2, wobei der reaktive Verdünner so ausgewählt ist, dass, in der homopolymerisierten Form, der homopolymerisierte reaktive Verdünner eine Glasübergangstemperatur im Bereich von etwa 90 bis 130 °C aufweist.

8. Verfahren nach Anspruch 2, wobei der reaktive Verdünner wenigstens ölmischbar ist.

9. Verfahren nach einem der obigen Ansprüche, wobei die Formulierung ferner wenigstens einen rheologischen Modifikator umfasst.

10. Verfahren nach einem der Ansprüche 1-9, wobei das Einbringen umfasst, die polymerbildende Zusammensetzung in einen zwischen einer Bohrlochwand und einem Futterrohr oder Liner ausgebildeten ringförmigen Bereich einzubringen.

11. Verfahren gemäß Anspruch 10, wobei das Verfahren ferner umfasst, nach dem Einbringen der polymerbildenden Zusammensetzung eine Nachpumpflüssigkeit zu injizieren.

12. Verfahren nach einem der Ansprüche 1-9, wobei das Einbringen umfasst, die polymerbildende Zusammensetzung in einen zwischen einer ersten Futterrohrtour und einer zweiten Futterrohrtour ausgebildeten ringförmigen Bereich einzubringen.

13. Verfahren nach einem der Ansprüche 1-9, wobei das Einbringen umfasst, die polymerbildende Zusammensetzung zwischen einem Steigrohr und einer Bohrlochwand oder Futterrohrtour und angrenzend an einen mechanischen Packer einzubringen.

14. Verfahren nach einem der Ansprüche 1-9, wobei das Einbringen der polymerbildenden Zusammensetzung als Reaktion auf das Auftreten eines Flüssigkeitsverlusts im Bohrloch erfolgt.

15. Verfahren nach einem der Ansprüche 1-9, ferner umfassend ein Abdichten des Bohrlochs und Stilllegen.

## Revendications

1. Procédé de traitement d'un puits de forage, comprenant :
le forage du puits avec un fluide de forage ;
le placement d'une composition de formation de polymère dans le puits de forage ; et
le déclenchement de la polymérisation de la composition de formation de polymère pour former un matériau polymérisé dans la région sélectionnée du puits de forage, dans lequel le placement d'une composition de formation de polymère déplace directement le fluide de forage dans au moins une région sélectionnée du puits de forage.

2. Procédé selon la revendication 1, dans lequel la composition de formation de polymère comprend au moins un constituant polymérisable et au moins un déclencheur et dans lequel la composition de formation de polymère comprend au moins un diluant réactif et/ou au moins un diluant inerte comprenant un liquide oléagineux ou un solvant mutuel.

3. Procédé selon la revendication 2, dans lequel ledit au moins un constituant polymérisable comprend un homopolymère de butadiène et/ou un diméthacrylate de polybutadiène.

4. Procédé selon la revendication 2, dans lequel le diluant réactif est un ester ou un amide d'acides carboxyliques non saturés.

5. Procédé selon la revendication 2, dans lequel le diluant réactif comprend au moins un ester cycloalkyle de (méth)acrylate.

6. Procédé selon la revendication 2, dans lequel le diluant réactif est sous forme liquide et présente une viscosité à 250 °C allant d'environ 0,002 à 0,020 Pa.s (2 à 20 cps).

7. Procédé selon la revendication 2, dans lequel le diluant réactif est sélectionné de sorte que si, sous forme homopolymérisée, le diluant réactif homopolymérisé présente une température de transition vitreuse allant d'environ 90 à 130 °C.

8. Procédé selon la revendication 2, dans lequel le diluant réactif est au moins miscible dans l'huile.

9. Procédé selon l'une des revendications ci-dessus, dans lequel la formulation comprend en outre au moins un modificateur rhéologique.

10. Procédé selon l'une des revendications 1 à 9, dans lequel le placement comprend le placement de la composition de formation de polymère dans une région annulaire formée entre une paroi du puits de forage et un tubage ou un revêtement.

11. Procédé selon la revendication 10, dans lequel le procédé comprend en outre l'injection d'un fluide de déplacement après le placement de la composition de formation de polymère.

12. Procédé selon l'une des revendications 1 à 9, dans lequel le placement comprend le placement de la composition de formation de polymère dans une région annulaire formée entre une première colonne de tubage et une seconde colonne de tubage.

13. Procédé selon l'une des revendications 1 à 9, dans lequel le placement comprend le placement de la composition de formation de polymère entre un tubage de production et une paroi du puits de forage ou une colonne de tubage et adjacent à une garniture mécanique.

14. Procédé selon l'une des revendications 1 à 9, dans lequel le placement comprend le placement de la composition de formation de polymère se fait en réponse à une expérience de perte de fluide en fond de trou.

15. Procédé selon l'une des revendications 1 à 9, comprenant en outre le scellement du puits de forage et l'abandon.
